Europäisches Patentamt

European Patent Office

Office européen des brevets

(19)

(11) Publication number: **0 184 424 B1**

## EUROPEAN PATENT SPECIFICATION

(12)

(45) Date of publication of patent specification: 31.07.91   (51) Int. Cl.⁵: **G01S 13/30**, G01S 13/20

(21) Application number: **85308782.3**

(22) Date of filing: **03.12.85**

(54) **Composite pulse radar system having means for eliminating interference between pulses.**

(30) Priority: **04.12.84 JP 256314/84**

(43) Date of publication of application:
**11.06.86 Bulletin 86/24**

(45) Publication of the grant of the patent:
**31.07.91 Bulletin 91/31**

(84) Designated Contracting States:
**FR GB NL**

(56) References cited:
**FR-A- 1 191 320**
**FR-A- 1 558 734**
**FR-A- 1 579 822**
**GB-A- 1 424 026**

(73) Proprietor: **NEC CORPORATION**
**7-1, Shiba 5-chome Minato-ku**
**Tokyo 108-01(JP)**

(72) Inventor: **Matsuda, Shoji**
**c/o Nec Corporation 33-1 Shiba 5-chome**
**Minato-ku Tokyo(JP)**
Inventor: **Isobe, Eiji**
**c/o Nec Corporation 33-1 Shiba 5-chome**
**Minato-ku Tokyo(JP)**

(74) Representative: **Jackson, David Spence et al**
**REDDIE & GROSE 16, Theobalds Road**
**London, WC1X 8PL(GB)**

## Description

The present invention relates to a composite pulse radar system of the kind comprising: a pulse generator generating composite pulses having a short pulse and a long pulse with an interval between the short and long pulses, a pulse transmitter transmitting a plurality of said composite pulses generated by said pulse generator, in a given repeated cycle, a short pulse receiver and a long pulse receiver receiving respectively short echo video signals for the transmitted short pulse and long echo video signals for the transmitted long pulse, a delaying means for delaying at least the short echo video signal received in response to a given transmitted composite pulse, for a predetermined time equal to the interval between the transmission of the respective short and long pulse of said given transmitted composite pulse; and a combining means for combining the output signal of said delaying means and the long echo video signal, both corresponding to the said given transmitted composite pulse and for providing at its output a resultant composite video signal.

A conventional pulse radar system employs a long transmitted pulse with a large pulse width because it increases the system gain and hence extends the maximum target detectable range. However, a large pulse width prolongs the saturation time in a radar receiver due to the leaking of the transmitted pulse which occurs shortly after transmission, and it thereby becomes impossible to detect a target located at a position within the range equivalent to the saturation time. This disadvantage leads to material deficiency in a radar system that particularly requires short-range coverage performance.

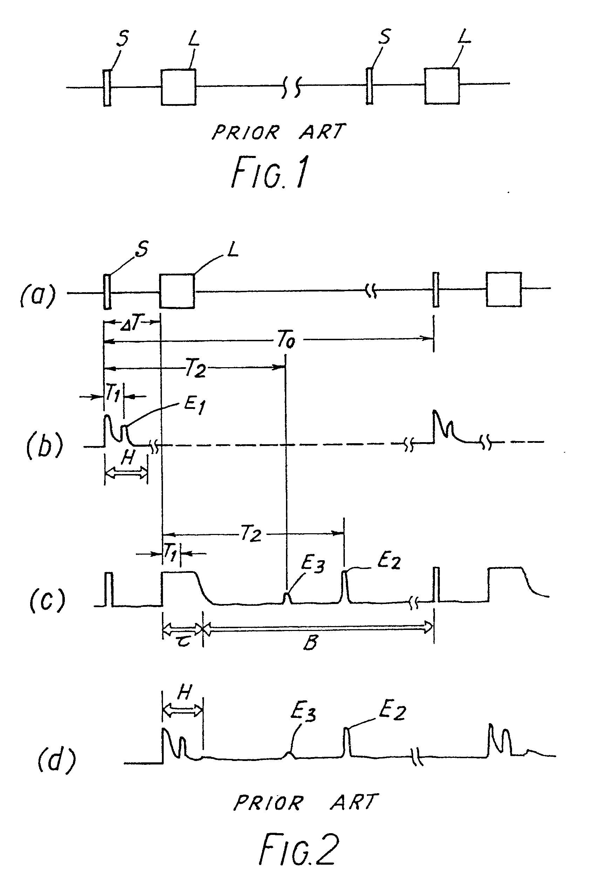

In order to overcome this disadvantage, a short pulse has been used, in addition to the long pulse, for short-range coverage. It is transmitted shortly before the transmission of the long pulse. This system is known as a composite pulse radar system. Fig. 1 shows an example of composite pulse each consisting of a combination of a short pulse S and a long pulse L. It may not necessarily be required that the short pulses S be equal in number to the long pulses L or that the width of every short pulses be identical. The interval between the short and long pulses S and L is required to be equal to or longer than the width of the long pulse L.

The relationship between transmission and reception in the conventional composite pulse radar system will now be described with reference to Fig. 2 which shows the case where each composite pulse includes one short pulse S and one long pulse L.

Fig. 2(a) shows the timing of transmission of the respective short and long pulses S and L. The pulse interval $\Delta T$ between the two pulses S and L is set to be a little longer than the width of the long pulse L. Figs 2(b) and 2(c) respectively show the video output signals from a short pulse receiver and a long pulse receiver, which respectively receive echo signals $E_1$ for the short pulse S and $E_2$ for the long pulse L. To simplify the explanation, delays at the receiver are neglected. The time indicated by $\tau$ in Fig. 2(c) represents the saturation time period of the long pulse receiver due to the leaking of the transmitted long pulse.

It is now assumed that a target is located at a short distance given by $CT_{1/2}$ (where $T_1 < T$ and C is the velocity of light) from the radar system, hereinafter called a "short-distance target". An echo signal from the short-distance target for the long pulse L cannot be detected by the long pulse receiver because it is received during the saturation time $\tau$. On the other hand, an echo signal $E_1$ from the short-distance target for the short pulse S can be detected. As shown in Fig. 2(d), the received echo signal $E_1$ for the short pulse S is delayed for a pulse interval $\Delta T$, and the echo signal received during the saturation time $\tau$ for the long pulse L is replaced with the delayed received echo signal $E_1$ to be combined with the echo video signal $E_2$ for the long pulse. For short-range monitoring the short pulse video signal is selectively monitored during a time period indicated by H in Fig. 2(b) which is shorter than $\Delta T$, while for the long-range monitoring the long pulse video signal is selected in a duration B shown in Fig. 2(c). Thus the short-range detecting performance of the pulse radar is improved.

However, the conventional composite pulse radar system still involves a material disadvantage if there is relatively large target which strongly reflects radio waves and is located at a distance of $CT_{2/2}$ ($T_2 > \Delta T$). In this case, an echo signal $E_3$ from the large target for the short pulse is received during the long-range monitoring period B in addition to the echo signal $E_2$ for the long pulse, as shown in Figs. 2(c) and Fig. 2(d). To prevent this false signal the time interval $\Delta T$ between the short and long pulses could be lengthened or the respective frequencies of the long pulse L and the short pulse S could be made different from each other. However, the former method involves a disadvantage since it reduces the number of target hit times (or data rate), thereby lowering the probability of detecting a target, and the latter method has the disadvantage of broadening the bandwidth occupied by the radar, thereby impairing the effective use of radio waves.

FR-A-1558734 describes a composite pulse radar system for receiving simultaneously signals originating from airborne targets at long and short distances. The system generates superimposed beams of pulses having different lengths. Each train of pulses consists of a long pulse and a short pulse. Interference signals arising from the ground and from rain are eliminated. Echoes from the long and short pulses are treated differently, the echoes from short pulses being passed through a wide bandfilter and delayed, and the echoes from the long pulses being passed through a narrow bandfilter.

Accordingly, it is an object of this invention to provide a system in which any echo signal resulting from a short pulse is prevented from interfering with the reception of an echo signal resulting from long pulse without involving any reduction in the number of target hit times or broadening the occupied bandwidth.

According to the present invention a composite pulse radar system of the kind defined hereinbefore at the beginning is characterised in that the interval of time between the short and long pulses of the transmitted composite pulses varies from transmitted composite pulse to transmitted composite pulse and in that the system comprises further: a correlating means correlating the resultant composite video signals for a plurality of successive cycles for cancelling in its correlated output signals the assynchronous interferences due to false images of transmitted short pulse received during the period of reception of the long echo video signals.

The invention will now be described by way of example with reference to the accompanying drawings, in which:-

Figs. 1 and 2 are diagrams showing an example of transmitted pulses according to a conventional composite pulse radar system and timing charts showing the time relationship between the transmitted pulses and the received echo signals, respectively;

Fig. 3 is a block diagram of one preferred embodiment of this invention, showing an exemplary construction of the composite pulse radar system;

Fig. 4 shows the time relationship between the transmission pulses and received echo signals according to the embodiment shown in Fig. 3;

Fig. 5 is a block diagram of an example of the sweep correlator shown in Fig. 3; and

Fig. 6 shows timing charts used for describing the operation of the correlator of Fig. 5.

Description of the Preferred Embodiment

The preferred embodiment of this invention will be described hereinafter, which is in the case where the respective numbers of short pulses and long pulses are equally one.

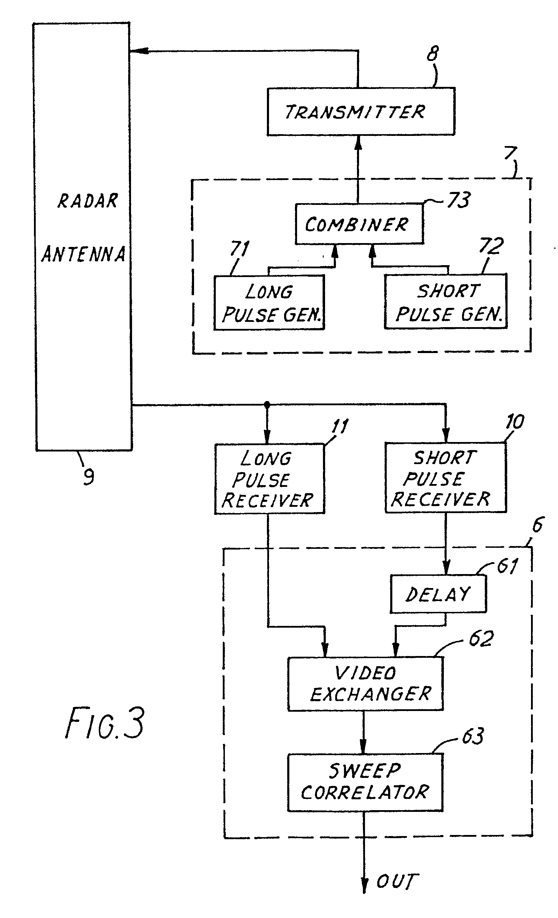

Referring to Fig. 3, the embodiment comprises a composite pulse generator 7 which generates such composite pulses that the interval between short and long pulses varies in each cycle, a transmitter 8, a radar antenna 9, a short pulse receiver 10 which receives an echo video signal for the short pulse (hereinafter called "short pulse video signal"), a long pulse receiver 11 which receives an echo video signal for the long pulse (hereinafter called "long pulse video signal"), and a video processing section 6 which combines the short and long pulse video signals and eliminates asynchronous interference. In this embodiment the composite pulse generator 7 includes a long pulse generator 71, a short pulse generator 72 and a combiner 73 which combines the outputs of the two generators 71 and 72 to generate a composite pulse. In the video processing section 6, the short pulse video signal from the short pulse receiver 10 is delayed for $\Delta T$ by an delay element 61. A video exchanger 62 selects one of the video signals of the long pulse video signal from the long pulse receiver 11 and the delayed short pulse video signal from the delay element 61 to obtain composite video signal for the short and long pulses. The resultant video signal is correlated with the video signals which have been obtained throughout the past several periods (sweeps), so that the ones which are not sufficiently correlated with the resultant video signal are eliminated as interference. As an example of this correlation processing, there is a process of extracting only those video signals that are located in the same position on the time axis throughout the past several cycles and of eliminating any false image that varies in its time position.

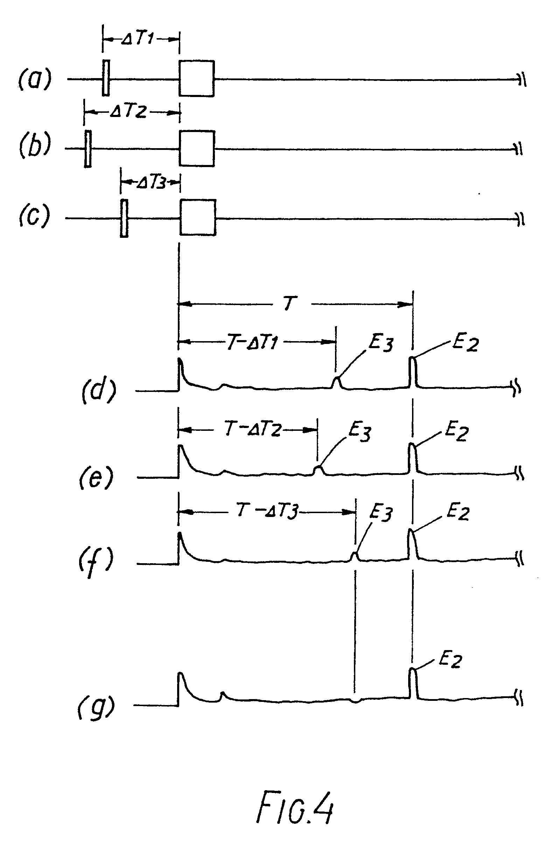

The operation of eliminating the radio interference between pulses in accordance with this invention will be described with reference to Fig. 4. Figs. 4(a), 4(b) and 4(c) show the timing of each transmission over three successive cycles. The interval between the short pulse S and the long pulse L is varied each cycle as $\Delta T_1$, $\Delta T_2$ and $\Delta T_3$, respectively. Figs. 4(d), 4(e) and 4(f) show combined video signal for the short and long pulses corresponding to the respective transmissions shown in Figs. 4(a), 4(b) and 4(c). In this figure, the echo signal for the long pulse L which has been reflected from a target located at a distance of $CT/2$ - (where $T > \Delta T_1, \Delta T_2, \Delta T_3$) is indicated by $E_2$ with the echo signal (false image) for the short pulse being indicated by $E_3$. Since the pulse interval between the short and long pulses S and L changes in each cycle, the echo signal $E_3$ for the short pulse S appears in a different position in each cycle, while the echo signal $E_2$ for the long pulse L appears in the same position. Therefore, if video signal correlation over several successive cycles is performed, the false image by the echo signals $E_3$ can be individually eliminated. An example of output waveforms obtained by the correlator is shown in Fig. 4(g).

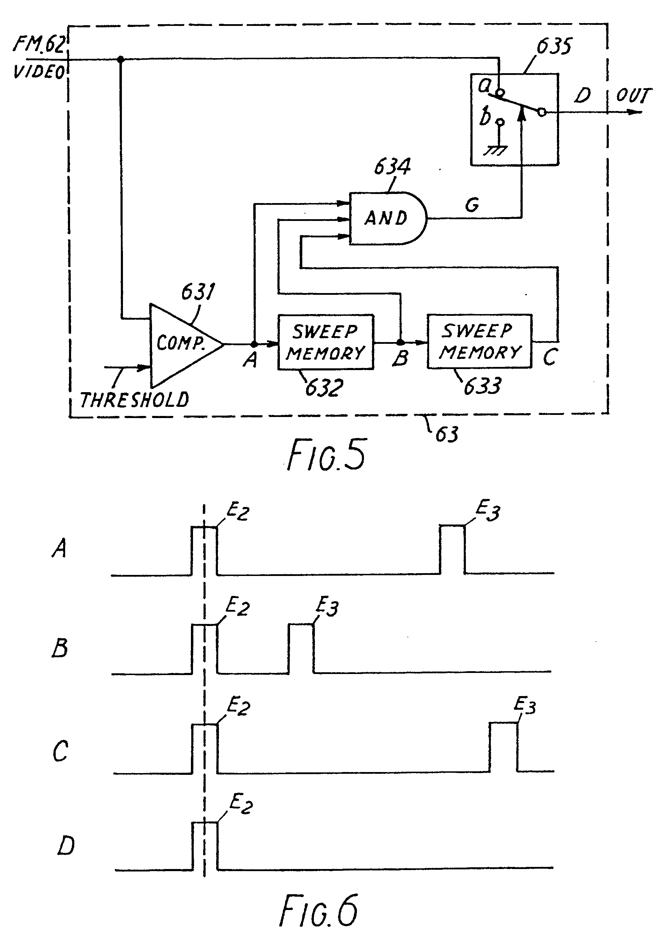

Fig. 5 shows an exemplary construction of a sweep correlator 63 which correlates the video signals over several successive cycles. The combined video signal for the short and long pulses obtained by the video exchanger 62 is sent out to a comparator 631 in order to identify a desired target signal. The comparator 631 provides a "HIGH" level signal output when the combined video signal is above a certain level (or threshold). An output signal A of the comparator 631 is delayed by one sweep (or one interval between two transmitted composite pulses: $T_0$) by a sweep memory 632 (hereinafter called a "delayed signal B"), and this delayed signal B is further delayed for the interval of $T_0$ by the sweep memory 633 to generate an output C (hereinafter called a "delayed signal C"). These signals A, B and C are fed to an AND gate 634. Only when the signals A, B and C are simultaneously present does the AND gate 634 output a gate signal G which is fed to a switch 635. The switch 635 is switched over to a terminal a by the gate signal G, and the combined video signal from the combiner 62 is then provided as the output from the sweep correlator 63. On the other hand, when no gate signal G from the AND gate 634 is present, the switch 635 is switched over to a terminal b and no output is generated from the sweep correlator 63. As shown in Fig. 6, only when there is a coincidence in time relationship between the received signal A, the signal B received in the previous sweep and the signal C received two sweeps previously, is the switch 635 actuated and thus an output D produced as the target signal $E_2$. On the other hand, when the three signals do not coincide in time relationship, the switch 635 is not actuated and no output is produced since the signal is judged to be an interference signal $E_3$ (or false image).

In the method of this invention, as described above, the interval between the short and long pulses in the transmitted composite pulse is varied in each cycle. Therefore, if the received echo signal of each transmitted pulse from a reflecting target is monitored on the basis of the timing of a given reference transmitted pulse, the received echo signals for the reference transmitted pulse from various reflecting targets appear in the same time position in each cycle so long as the direction of the radar antenna is fixed. However, the received echo signals for other transmitted pulses appear in a different position on the time axis in accordance with the variation in the interval in each transmitted pulse. As a result, a received signal at a random timing in each cycle in relation to the timing of the reference transmitted pulse, or called "asynchronous received signal", can be detected and eliminated.

It is to be noted that the present invention can be effective irrespective of whether each of the intervals between the long pulses to be transmitted is equal or staggered. Furthermore, in this preferred embodiment, the number of short pulses is equal to that of long pulses. However, this invention is not limited thereto. In accordance with this invention, in a case where the number of short pulses differs from that of long pulses as exemplarily shown in Fig. 1, the eliminating of radio interference between pulses can be achieved to the same extent as the above-mentioned case by the operation of correlating received video signals over successive cycles on the receiver side.

In another case where the frequencies of both short and long pulses are different, strong echo signals exceeding the isolation level of a filter for separating short and long pulses tends to cause interference between pulses. However, the invention of this application can be adapted to eliminate such interference as well.

As described above, this invention is arranged in such a manner that the interval between the short and long pulses in each composite pulse to be transmitted during one cycle is varied in each cycle and the asynchronous signals in the received video signals are eliminated by comparison of the received video signals without causing the problems of reduction in the number of target hits due to mere lengthening of the interval between short and long pulses or of the broadening of an occupied bandwidth due to the allocation of two frequencies for short and long pulses as practiced in conventional methods.

## Claims

1.  Composite pulse radar system comprising: a pulse generator (7) generating composite pulses having a short pulse and a long pulse with an interval between the short and long pulses, a pulse transmitter (8) transmitting a plurality of said composite pulses generated by said pulse generator, in a given repeated cycle, a short pulse receiver (10) and a long pulse receiver (11) receiving respectively short echo video signals for the transmitted short pulse and long echo video signals for the transmitted long pulse, a delaying means (61) for delaying at least the short echo video signal received in response to a given transmitted composite pulse, for a predetermined time equal to the interval between the transmission of the respective short and long pulse of said given transmitted composite pulse; and a combining means (62) for combining the output signal of said delaying means (61) and the long echo video signal, both corresponding to the said given transmitted composite pulse and for providing at its output a resultant composite video signal, characterised in that the interval of time between the short and the long pulses of the transmitted composite pulses varies from transmitted composite pulse to transmitted composite pulse and in that the system comprises further:

a correlating means (63) correlating the resultant composite video signals for a plurality of successive repeated cycles for cancelling in its correlated output signals the asynchronous interferences due to false images of the transmitted short pulse received during the period of reception of the long echo video signals.

2. A composite pulse radar according to claim 1, characterised in that the correlating means comprises:

a plurality of sweep memories (632, 633) connected in series which delay the output of said combining means (62) for a time equivalent to the repetition period of said repeated cycles;

an AND gate (634) which is supplied with at least one of the input and the output of said respective sweep memories (632, 633); and

a switching means (635) which produces the output of said combining means (62) only when the output of said AND gate (634) is present.

3. A composite pulse radar according to claim 1, characterised in that each of said short and long pulses is a single pulse.

4. A composite pulse radar according to claim 1, characterised in that the repeated cycle of said composite pulses is equal.

5. A composite pulse radar according to claim 1, characterised in that the repeated cycle of said composite pulses is different.

6. A composite pulse radar according to claim 1, characterised in that the carrier frequencies of said short and long pulses are different.

7. A composite pulse radar according to claim 2, characterised in that the sweep memories (632, 633) connected in series includes a front stage sweep memory (632) and a rear stage sweep memory (633), the input and the output of said front stage sweep memory (632) as well as the output of the rear stage sweep memory (633) being fed to the input of said AND gate (634).

**Revendications**

1. Système radar à impulsions composées comprenant: un générateur d'impulsions (7) produisant des impulsions composées comprenant une impulsion courte et une impulsion longue avec un intervalle entre les impulsions courtes et longues, un émetteur d'impulsions (8) émettant une pluralité desdites impulsions composées produites par ledit générateur d'impulsions, au cours d'un cycle répété donné, un récepteur d'impulsions courtes (10) et un récepteur d'impulsions longues (11) recevant respectivement des signaux vidéo d'échos courts pour l'impulsion courte émise et des signaux vidéo d'échos longs pour l'impulsion longue émise, un moyen de retard (61) pour retarder au moins le signal vidéo d'écho court reçu en réponse à une impulsion composée émise donnée, pendant un temps prédéterminé égal à l'intervalle séparant l'émission des impulsions courte et longue respectives de ladite impulsion composée émise donnée; et un moyen de combinaison (62) pour combiner le signal de sortie dudit moyen de retard (61) et le signal vidéo d'écho long, ceux-ci correspondant tous deux à ladite impulsion composée émise donnée, pour fournir à sa sortie un signal vidéo composé résultant, caractérisé en ce que l'intervalle de temps séparant les impulsions courtes et longues des impulsions composées émises, varie d'une impulsion composée émise à l'autre, et en ce que le système comprend en outre:

un moyen de corrélation (63) corrélant les signaux vidéo composés résultants pendant une pluralité de cycles répétés successifs afin d'annuler dans ces signaux de sortie corrélés, les interférences asynchrones dûes à de fausses images de l'impulsion courte émise reçue au cours de la période de réception des signaux vidéo d'échos longs.

2. Radar à impulsions composées selon la revendication 1, caractérisé en ce que le moyen de corrélation comprend:

une pluralité de mémoires de balayage (632, 633) connectées en série, qui retardent la sortie dudit moyen de combinaison (62) d'un temps équivalent à la période de répétition desdits cycles répétés;

une porte ET (634) à laquelle est appliquée au moins l'une de l'entrée et de la sortie desdites mémoires de balayage respectives (632, 633); et

un moyen de commutation (635) qui ne produit la sortie dudit moyen de combinaison (62) que lorsque la sortie de ladite porte ET (634) est présente.

3. Radar à impulsions composées selon la revendication 1, caractérisé en ce que chacun desdites impulsions courtes et longues, est une impulsion unique.

4. Radar à impulsions composées selon la revendication 1, caractérisé en ce que le cycle répété desdites impulsions composées est constant.

5. Radar à impulsions composées selon la revendication 1, caractérisé en ce que le cycle répété desdites impulsions composées est variable.

6. Radar à impulsions composées selon la revendication 1, caractérisé en ce que les fréquences porteuses desdites impulsions courtes et longues sont différentes.

7. Radar à impulsions composées selon la revendication 2, caractérisé en ce que les mémoires de balayage (632, 633) connectées en série, comprennent une mémoire de balayage d'étage avant (632) et une mémoire de balayage d'étage arrière (633), l'entrée et la sortie de ladite mémoire de balayage d'étage avant (632) et la sortie de la mémoire de balayage d'étage arrière (632) étant fournies à l'entrée de ladite porte ET (634).

**Patentansprüche**

1. Radargerät mit zusammengesetzten Impulsen mit: einem Impulsgenerator (7) zum Erzeugen zusammengesetzter Impulse aus einem kurzen Impuls und einem langen Impuls und einem dazwischen liegenden Intervall, einem Impulssender (8) zum Übertragen mehrerer zusammengesetzter Impulse aus dem Impulsgenerator in einem vorgegebenen Wiederholungszyklus, einem Empfänger (10) für kurze Impulse und einem Empfänger (11) für lange Impulse, die kurze Echo-Videosignale für den gesendeten kurzen Impuls bzw. lange Echo-Videosignale für den gesendeten langen Impuls empfangen, einer Verzögerungseinrichtung (61) zum Verzögern zumindest des kurzen Echo-Videosignals, das aufgrund eines vorgegebenen, gesendeten, zusammengesetzten Impulses empfangen worden ist, während eines vorgegebenen Zeitraums gleich dem Intervall zwischen der Übertragung des entsprechenden kurzen bzw. langen Impulses des bestimmten, gesendeten, zusammengesetzten Impulses; und mit einer Kombinationseinheit (62) zum Kombinieren des Ausgangssignals der Verzögerungseinheit (61) und des langen Echo-Videosignals, die beide dem vorgegebenen, gesendeten, zusammengesetzten Impuls entsprechen, und zum Erzeugen eines resultierenden, zusammengesetzten Videosignals an ihrem Ausgang, **dadurch gekennzeichnet**, daß das Zeitintervall zwischen dem kurzen und dem langen Impuls des gesendeten, zusammengesetzten Impulses von einem übertragenen, zusammengesetzten Impuls zum nächsten variiert, und daß das Gerät ferner eine Korrelationseinheit (63) aufweist zum Korrelieren der erhaltenen, zusammengesetzten Videosignale für mehrere aufeinanderfolgend wiederholte Zyklen zum Auslöschen der asynchronen Interferenzen in ihren korrelierten Ausgangssignalen aufgrund von falschen Abbildungen des gesendeten, kurzen Impulses, der während der Empfangsperiode der langen Echo-Videosignale empfangen wurde.

2. Radargerät mit zusammengesetzten Impulsen nach Anspruch 1, **dadurch gekennzeichnet**, daß die Korrelationseinheit aufweist: mehrere Wobbel-Speicher (632, 633), die in Reihe geschaltet sind und das Ausgangssignal der Kombinationseinheit (62) um einen Zeitraum verzögern entsprechend der Wiederholperiode der Wiederholzyklen; eine UND-Torschaltung (634), der mindestens ein Eingangs- und/oder Ausgangssignal der zugehörigen Wobbel-Speicher (632, 633) zugeführt wird; und eine Umschalteinrichtung (635), die das Ausgangssignal der Kombinationseinheit (62) nur dann erzeugt, wenn das Ausgangssignal der UND-Torschaltung (634) vorhanden ist.

3. Radargerät mit zusammengesetzten Impulsen nach Anspruch 1, **dadurch gekennzeichnet**, daß jeder kurze und jeder lange Impuls ein Einzelimpuls ist.

4. Radargerät mit zusammengesetzten Impulsen nach Anspruch 1, **dadurch gekennzeichnet**, daß der Wiederholzyklus der zusammengesetzten Impulse gleich ist.

5. Radargerät mit zusammengesetzten Impulsen nach Anspruch 1, **dadurch gekennzeichnet**, daß der Wiederholzyklus der zusammengesetzten Impulse unterschiedlich ist.

6. Radargerät mit zusammengesetzten Impulsen nach Anspruch 1, **dadurch gekennzeichnet,** daß die Trägerfrequenzen der kurzen und langen Impulse unterschiedlich sind.

7. Radargerät mit zusammengesetzten Impulsen nach Anspruch 2, **dadurch gekennzeichnet,** daß die in Reihe geschalteten Wobbel-Speicher (632, 633) einen Eingangs-Wobbel-Speicher (632) und einen Endstufen-Wobbel-Speicher (633) aufweisen, wobei der Eingang und der Ausgang des Eingang-Wobbel-Speichers (632) sowie der Ausgang des Endstufen-Wobbel-Speichers (633) dem Eingang der UND-Torschaltung (634) zugeführt werden.

PRIOR ART

FIG.1

PRIOR ART

FIG.2

FIG.3

FIG.4

FIG.5

FIG.6

11